# EUROPÄISCHE PATENTSCHRIFT

(11) **EP 3 771 318 B1**
(45) Veröffentlichungstag und Bekanntmachung des Hinweises auf die Patenterteilung: **09.03.2022**
(21) Anmeldenummer: 20186889.0
(22) Anmeldetag: 21.07.2020
(51) Int. Cl.: A01B 59/041, A01B 59/043, A01B 69/00

(54) **LANDWIRTSCHAFTLICHES FAHRZEUGGESPANN**
AGRICULTURAL VEHICLE COMBINATION
VÉHICULE-REMORQUE AGRICOLE

(30) Priorität: 01.08.2019 DE 102019211496
(43) Veröffentlichungstag der Anmeldung: 03.02.2021
(73) Patentinhaber: Deere & Company, Moline, IL 61265 (US)
(72) Erfinder: PFAFFMANN, Simon, 68163 Mannheim (DE); KEGEL, Volker, 68163 Mannheim (DE); TARASINSKI, Nicolai, 68163 Mannheim (DE); DE MORAES BOOS, Felipe, 68163 Mannheim (DE)
(74) Vertreter: Stein, Stefan

(56) Entgegenhaltungen:
- EP-A1- 3 461 676
- EP-A1- 3 702 305
- EP-A1- 3 712 003
- CN-Y- 200 938 740
- US-A1- 2017 355 252

## Beschreibung

Die Erfindung betrifft ein landwirtschaftliches Fahrzeuggespann, bestehend aus einem als Geräteträger ausgebildeten Zugmodul mit einem bodeneingreifenden Antriebselement und einem an dem Zugmodul mittels einer Kupplungseinrichtung angebrachten Arbeitsgerät.

Ein derartiges landwirtschaftliches Fahrzeuggespann mit einem vollelektrischen Geräteträger mit Raupenantrieb wird beispielsweise von Aebi unter der Bezeichnung EC 170/130 angeboten. An dem Geräteträger lässt sich unter anderem ein Portalmähbalken oder ein Anhänger anbringen. Aufgrund seiner kompakten und wendigen Bauweise eignet sich der Geräteträger in erster Linie für Spezialaufgaben wie die Bearbeitung kleinerer Wiesenflächen in bergigem Terrain oder von Steillagen im Weinanbau.

Fahrzeuggespanne sind aus den Druckschriften EP 3 712 003 A1, EP 3 461 676 A1, EP 3 702 305 A1, US 2017/355252 A1 und CN 200 938 740 Y bekannt. Die Druckschriften EP 3 712 003 A1 und EP 3 702 305 A1 beschreiben Stand der Technik nach Artikel 54(3) EPÜ.

Es ist Aufgabe der vorliegenden Erfindung, ein landwirtschaftliches Fahrzeuggespann der eingangs genannten Art im Sinne universeller Einsatzmöglichkeiten weiterzubilden.

Diese Aufgabe wird durch ein landwirtschaftliches Fahrzeuggespann mit den Merkmalen des Patentanspruchs 1 gelöst.

Das landwirtschaftliche Fahrzeuggespann umfasst ein als Geräteträger ausgebildetes Zugmodul mit einem bodeneingreifenden Antriebselement und einem an dem Zugmodul mittels einer Kupplungseinrichtung angebrachten Arbeitsgerät mit einer das Arbeitsgerät zumindest während eines Transportbetriebs gegenüber dem Erdboden abstützenden Klappachse. Die Kupplungseinrichtung weist einen Drehkranz zur Bereitstellung eines Drehfreiheitsgrads zwischen dem Zugmodul und dem Arbeitsgerät entlang einer Längsachse des Arbeitsgeräts und ein Schwenkgelenk zur Bereitstellung eines Schwenkfreiheitsgrads zwischen dem Zugmodul und dem Arbeitsgerät entlang einer Hochachse des Zugmoduls auf, wobei das Schwenkgelenk zur Beeinflussung der Fahrtrichtung des Fahrzeuggespanns mittels eines Lenkaktuators bezüglich seines Schwenkeinschlags verstellbar ist.

Die mittels der Kupplungseinrichtung geschaffene flexible Anbindung des Arbeitsgeräts an das Zugmodul wie auch die insofern vorgesehene Integration einer durch das Schwenkgelenk gebildeten Knicklenkung führt zu einem besonders agilen Fahrverhalten des Fahrzeuggespanns selbst in hügeligem Terrain und bei Verwendung vergleichsweise schwerer bzw. groß dimensionierter Arbeitsgeräte. Dies ermöglicht nicht nur einen universellen Einsatz des Fahrzeuggespanns, sondern bewahrt zugleich die Vorteile gängiger Geräteträgerkonzepte hinsichtlich Flexibilität und Agilität.

Die Kupplungseinrichtung befindet sich typischerweise im Heckbereich des Zugmoduls, sodass das Antriebselement die Funktion einer angetriebenen Vorderachse und die Klappachse zumindest während des Transportbetriebs die Funktion einer mit dem Boden in Kontakt stehenden Hinterachse des Fahrzeuggespanns übernimmt. Während des Feldbetriebs wird die Klappachse in eine bodenferne Position verbracht, sodass sich das Arbeitsgerät über zur Feldbearbeitung vorgesehene Arbeitswerkzeuge und/oder zugehörige Führungsräder auf der zu bearbeitenden Feldoberfläche abstützt. Beispielhaft sei hier ein Arbeitsgerät in Gestalt einer Egge genannt, deren als Eggenscheiben bzw. Nachläuferwalzen ausgebildete Arbeitswerkzeuge auf der zu bearbeitende Feldoberfläche aufliegen bzw. in diese eingreifen. Für den Fall, dass das Arbeitsgerät mit angetriebenen Arbeitswerkzeugen ausgerüstet ist, ist es denkbar, diese über eine durch den Drehkranz der Kupplungseinrichtung hindurchgeführte Zapfwelle mit einem Nebenabtrieb des Zugmoduls zu verbinden. Bei dem Arbeitsgerät kann es sich dann zum Beispiel um einen Kreiselschwader, eine Reihensäeinheit oder dergleichen handeln.

Das landwirtschaftliche Fahrzeuggespann kann Bestandteil einer aus einer Vielzahl einzelner Fahrzeuggespanne bestehenden Fahrzeugflotte sein. Dabei besteht die Möglichkeit, dass diese fahrerlos betrieben werden, mithin über eine entsprechende autonome Fahrzeugsteuerung verfügen.

Vorteilhafte Weiterbildungen des erfindungsgemäßen Fahrzeuggespanns gehen aus den Unteransprüchen hervor.

Vorzugsweise handelt es sich bei dem bodeneingreifenden Antriebselement um einen einzelnen Rad- oder Raupenantrieb. Die Verwendung eines einachsigen Antriebs führt zu einer besonders guten Wendigkeit des Zugmoduls und damit des Fahrzeuggespanns.

Das bodeneingreifende Antriebselement kann elektrisch betrieben sein. Die Zuführung der elektrischen Energie erfolgt insbesondere über eine an einem Stromversorgungsfahrzeug anschließbare Kabelstrecke. Eine mögliche Ausführungsform einer derartigen Kabelstrecke für eine aus einer Vielzahl einzelner Fahrzeuggespanne bestehende Fahrzeugflotte ist zum Beispiel in der DE 10 2019 202 826 A1 gezeigt. Abweichend davon kann jedes der Fahrzeuggespanne auch über eine eigene Stromversorgung verfügen. Hierzu ist das Zugmodul mit einer wasserstoffgespeisten Brennstoffzelle oder einem Akkumulator ausgestattet. Ferner ist es möglich, anstelle eines elektrischen Antriebs einen dieselbetriebenen Verbrennungsmotor konventioneller Bauart vorzusehen.

Der Lenkaktuator ist insbesondere durch wenigstens einen Lenkzylinder gebildet, der zur Verstellung des Schwenkeinschlags zwischen einer Tragestruktur des Zugmoduls und einer mit dem Drehkranz verbundenen Basisplatte des Schwenkgelenks verläuft. Die Ansteuerung des Lenkzylinders kann hydraulisch erfolgen, es kann jedoch auch eine elektrohydraulische oder elektromotorische Betätigung vorgesehen sein.

Zusätzlich besteht die Möglichkeit, dass das Arbeitsgerät eine Vorrichtung zur Höhenverstellung von zur Feldbearbeitung vorgesehenen Arbeitswerkzeugen aufweist. Die Vorrichtung zur Höhenverstellung ist beispielsweise durch ein mittels eines Hydraulikzylinders betätigbares Parallelogrammgestänge gebildet, das eine Parallelverstellung der Arbeitswerkzeuge senkrecht zu einer zu bearbeitenden Feldoberfläche erlaubt.

Daneben kann das Arbeitsgerät eine Vorrichtung zum Verschwenken der Klappachse von einer für den Transportbetrieb vorgesehenen unteren Stellung in eine für den Feldbetrieb vorgesehene obere Stellung aufweisen, in der zugleich zur Feldbearbeitung vorgesehene Arbeitswerkzeuge in Bodenkontakt gebracht werden. Zum Ausheben des Arbeitsgeräts bzw. vor Aufnahme des Transportbetriebs wird die Klappachse in der umgekehrten Richtung zurückgeschwenkt. Die Vorrichtung zum Verschwenken der Klappachse kann einen zwischen einer tragenden Struktur des Arbeitsgeräts und einer Anlenkstelle der Klappachse verlaufenden Hydraulikzylinder umfassen.

Das erfindungsgemäße landwirtschaftliche Fahrzeuggespann wird im Folgenden anhand der beigefügten Zeichnungen näher erläutert. Hierbei bezeichnen übereinstimmende Bezugszeichen baulich identische oder bezüglich ihrer Funktion vergleichbare Komponenten. Es zeigen:
- Fig. 1: ein Ausführungsbeispiel eines erfindungsgemäßen landwirtschaftlichen Fahrzeuggespanns mit einem als Geräteträger ausgebildeten Zugmodul sowie einem daran angebrachten Arbeitsgerät in Aufsichtsdarstellung,
- Fig. 2: eine Seitendarstellung des in Fig. 1 wiedergegebenen landwirtschaftlichen Fahrzeuggespanns,
- Fig. 3: eine perspektivische Darstellung des in Fig. 1 wiedergegebenen landwirtschaftlichen Fahrzeuggespanns während eines Transportbetriebs, und
- Fig. 4: eine perspektivische Darstellung des in Fig. 1 wiedergegebenen landwirtschaftlichen Fahrzeuggespanns während eines Feldbetriebs.

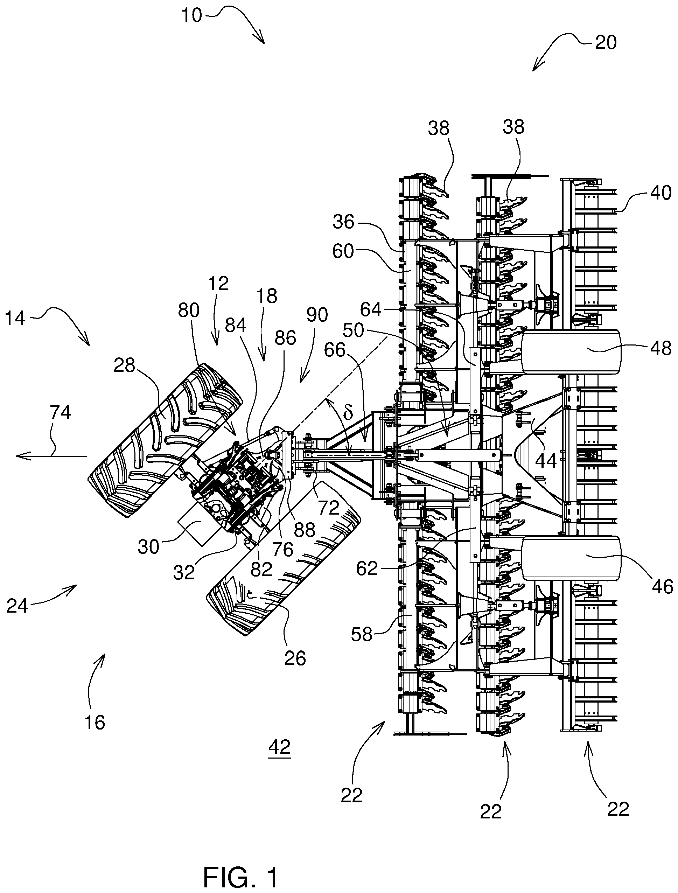

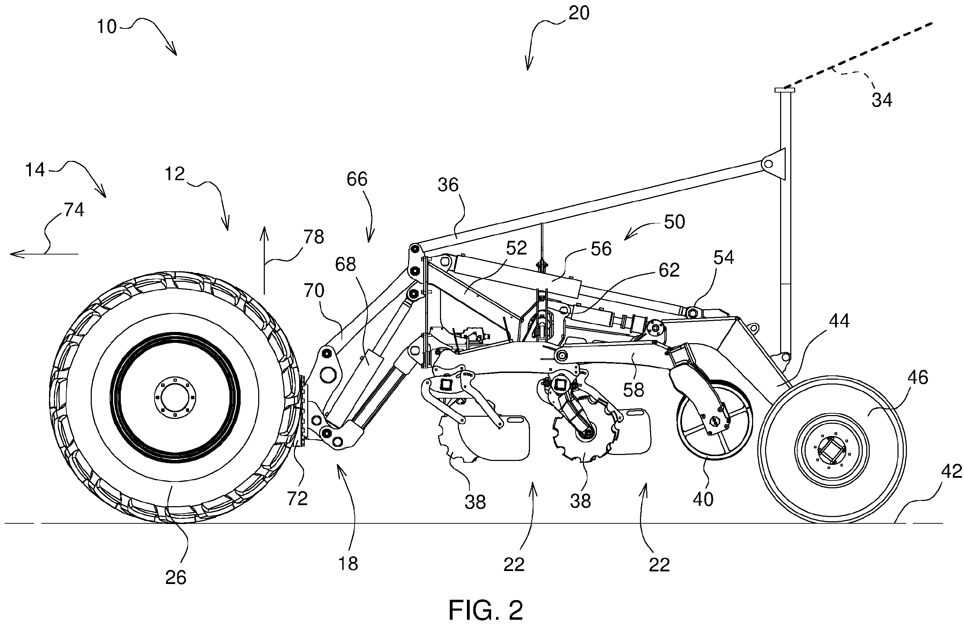

Fig. 1 zeigt ein Ausführungsbeispiel eines erfindungsgemäßen landwirtschaftlichen Fahrzeuggespanns, das nachfolgend unter gleichzeitiger Bezugnahme auf Fig. 2 beschrieben wird.

Das Fahrzeuggespann 10 umfasst ein als Geräteträger 12 ausgebildetes Zugmodul 14 mit einem bodeneingreifenden Antriebselement 16 und einem an dem Zugmodul 14 mittels einer Kupplungseinrichtung 18 angebrachten Arbeitsgerät 20 mit zur Feldbearbeitung vorgesehenen Arbeitswerkzeugen 22.

Bei dem bodeneingreifenden Antriebselement 16 handelt es sich um einen einzelnen Radantrieb 24 mit linken und rechten Antriebsrädern 26, 28, die mittels eines Elektromotors 30 über ein zwischengeschaltetes Differentialgetriebe 32 elektrisch betrieben werden. Die Zuführung der elektrischen Energie erfolgt über eine an einem Stromversorgungsfahrzeug anschließbare Kabelstrecke 34. Die Kabelstrecke 34 einschließlich des Stromversorgungsfahrzeugs ist nicht explizit dargestellt, weitere Einzelheiten lassen sich jedoch aus der DE 10 2019 202 826 A1 für den Fall einer aus einer Vielzahl einzelner Fahrzeuggespanne 10 bestehenden Fahrzeugflotte entnehmen. Diese werden fahrerlos betrieben und verfügen über eine entsprechende autonome Fahrzeugsteuerung.

Alternativ kann das bodeneingreifende Antriebselement 16 als einzelner Raupenantrieb ausgebildet sein. Der Raupenantrieb umfasst in diesem Fall auf jeder der beiden Seiten des Zugmoduls 14 eine mittels mehrerer Spann-, Leit- bzw. Antriebsrollen gelagerte Gummilaufkette.

Beispielsgemäß handelt es sich bei dem Arbeitsgerät 20 um eine Egge 36 mit als Eggenscheiben 38 bzw. Nachläuferwalzen 40 ausgebildeten Arbeitswerkzeugen 22, die auf einer zu bearbeitenden Feldoberfläche 42 aufliegen bzw. in diese eingreifen.

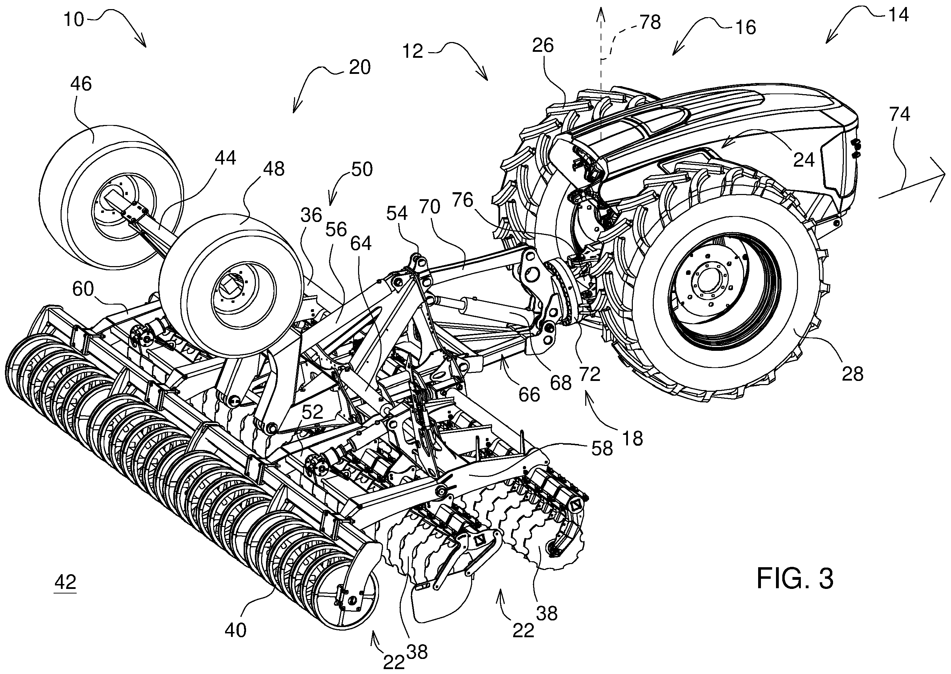

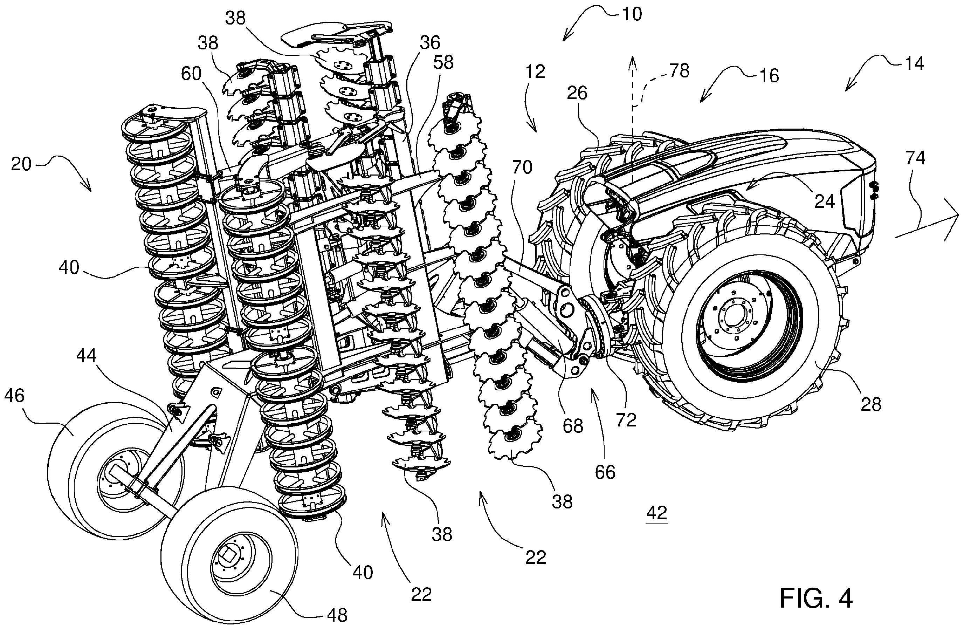

Im Heckbereich des Arbeitsgeräts 20 befindet sich eine Klappachse 44 mit linken und rechten Rädern 46, 48. Eine Vorrichtung 50 zum Verschwenken der Klappachse 44 erlaubt es, diese von einer für den Transportbetrieb vorgesehenen unteren Stellung gemäß Fig. 3, in der die Klappachse 44 das Arbeitsgerät 20 gegenüber dem Erdboden abstützt, in eine für einen Feldbetrieb vorgesehene obere Stellung gemäß Fig. 4 zu verschwenken, in der zugleich die zugehörigen Arbeitswerkzeuge 22 in Bodenkontakt gebracht werden. Zum Ausheben des Arbeitsgeräts 20 bzw. vor Aufnahme des Transportbetriebs wird die Klappachse 44 in der umgekehrten Richtung zurückgeschwenkt. Wie sich Fig. 2 entnehmen lässt, umfasst die Vorrichtung 50 zum Verschwenken der Klappachse 44 einen zwischen einer tragenden Struktur 52 des Arbeitsgeräts 20 und einer Anlenkstelle 54 der Klappachse 44 verlaufenden Hydraulikzylinder 56.

Beispielsgemäß sind die Arbeitswerkzeuge 22 entlang linker und rechter Ausleger 58, 60 verteilt angeordnet und lassen sich mittels zugehöriger Hydraulikzylinder 62, 64 in eine für den Transportbetrieb vorgesehene aufrechte Position gemäß Fig. 4 verbringen.

Ferner weist das Arbeitsgerät 20 eine in Fig. 2 zu erkennende Vorrichtung 66 zur Höhenverstellung der Arbeitswerkzeuge 22 auf. Die Vorrichtung 66 zur Höhenverstellung ist durch ein mittels eines weiteren Hydraulikzylinders 68 betätigbares Parallelogrammgestänge 70 gebildet, das eine Parallelverstellung der Arbeitswerkzeuge 22 senkrecht zur zu bearbeitenden Feldoberfläche 42 erlaubt.

Die zwischen Zugmodul 14 und Arbeitsgerät 20 vorgesehene Kupplungseinrichtung 18 weist einen Drehkranz 72 zur Bereitstellung eines Drehfreiheitsgrads zwischen dem Zugmodul 14 und dem Arbeitsgerät 20 entlang einer Längs- bzw. Wankachse 74 des Arbeitsgeräts 20 und ein Schwenkgelenk 76 zur Bereitstellung eines Schwenkfreiheitsgrads zwischen dem Zugmodul 14 und dem Arbeitsgerät 20 entlang einer Hochachse 78 des Zugmoduls 14 auf. Das Schwenkgelenk 76 ist zur Beeinflussung der Fahrtrichtung des Fahrzeuggespanns 10 mittels eines Lenkaktuators 80 bezüglich seines Schwenkeinschlags δ verstellbar. Der Lenkaktuator 80 ist durch linke und rechte Lenkzylinder 82, 84 gebildet, die zur Verstellung des Schwenkeinschlags δ zwischen einer Tragstruktur 86 des Zugmoduls 14 und einer mit dem Drehkranz 72 verbundenen Basisplatte 88 des Schwenkgelenks 76 verlaufen. Die Ansteuerung der beiden Lenkzylinder 82, 84 erfolgt hydraulisch.

Die Kupplungseinrichtung 18 befindet sich im vorliegenden Fall im Heckbereich 90 des Zugmoduls 14, sodass das Antriebselement 16 die Funktion einer angetriebenen Vorderachse und die Klappachse 44 zumindest während des Transportbetriebs die Funktion einer mit dem Boden in Kontakt stehenden Hinterachse des Fahrzeuggespanns 10 übernimmt. Im Feldbetrieb wird die Klappachse 44 in eine bodenferne Position verbracht, sodass sich das Arbeitsgerät 20 über seine Arbeitswerkzeuge 22 und/oder zugehörige (nicht dargestellte) Führungsräder auf der zu bearbeitenden Feldoberfläche 42 abstützt.

Für den Fall, dass das Arbeitsgerät 20 mit angetriebenen Arbeitswerkzeugen 22 ausgerüstet ist, lassen sich diese über eine durch den Drehkranz 72 der Kupplungseinrichtung 18 hindurchgeführte Zapfwelle mit einem Nebenabtrieb des Zugmoduls 14 in Verbindung bringen. Bei dem Arbeitsgerät 20 kann es sich dann zum Beispiel um einen Kreiselschwader, eine Reihensäeinheit oder dergleichen handeln.

Die mittels der Kupplungseinrichtung 18 geschaffene flexible Anbindung des Arbeitsgeräts 20 an das Zugmodul 14 wie auch die insofern vorgesehene Integration einer durch das Schwenkgelenk 76 gebildeten Knicklenkung führt zu einem besonders agilen Fahrverhalten des Fahrzeuggespanns 10 selbst in hügeligem Terrain und bei Verwendung vergleichsweise schwerer bzw. groß dimensionierter Arbeitsgeräte 20.

## Patentansprüche

1. Landwirtschaftliches Fahrzeuggespann, umfassend ein als Geräteträger (12) ausgebildetes Zugmodul (14) mit einem bodeneingreifenden Antriebselement (16) und ein an dem Zugmodul (14) mittels einer Kupplungseinrichtung (18) angebrachtes Arbeitsgerät (20) mit einer das Arbeitsgerät (20) zumindest während eines Transportbetriebs gegenüber dem Erdboden abstützenden Klappachse (44), wobei die Kupplungseinrichtung (18) einen Drehkranz (72) zur Bereitstellung eines Drehfreiheitsgrads zwischen dem Zugmodul (14) und dem Arbeitsgerät (20) entlang einer Längsachse (74) des Arbeitsgeräts (20) und ein Schwenkgelenk (76) zur Bereitstellung eines Schwenkfreiheitsgrads zwischen dem Zugmodul (14) und dem Arbeitsgerät (20) entlang einer Hochachse (78) des Zugmoduls (14) aufweist, wobei das Schwenkgelenk (76) zur Beeinflussung der Fahrtrichtung des Fahrzeuggespanns (10) mittels eines Lenkaktuators (80) bezüglich seines Schwenkeinschlags (δ) verstellbar ist.

2. Fahrzeuggespann nach Anspruch 1, **dadurch gekennzeichnet, dass** es sich bei dem bodeneingreifenden Antriebselement (16) um einen einzelnen Rad- oder Raupenantrieb (24) handelt.

3. Fahrzeuggespann nach Anspruch 1 oder 2, **dadurch gekennzeichnet, dass** das bodeneingreifende Antriebselement (16) elektrisch betrieben ist.

4. Fahrzeuggespann nach wenigstens einem der Ansprüche 1 bis 3, **dadurch gekennzeichnet, dass** der Lenkaktuator (80) durch wenigstens einen Lenkzylinder (82, 84) gebildet ist, der zur Verstellung des Schwenkeinschlags (δ) zwischen einer Tragestruktur (86) des Zugmoduls (14) und einer mit dem Drehkranz (72) verbundenen Basisplatte (88) des Schwenkgelenks (76) verläuft.

5. Fahrzeuggespann nach wenigstens einem der Ansprüche 1 bis 4, **dadurch gekennzeichnet, dass** das Arbeitsgerät (20) eine Vorrichtung (66) zur Höhenverstellung von zur Feldbearbeitung vorgesehenen Arbeitswerkzeugen (22) aufweist.

6. Fahrzeuggespann nach wenigstens einem der Ansprüche 1 bis 5, **dadurch gekennzeichnet, dass** das Arbeitsgerät (20) eine Vorrichtung (50) zum Verschwenken der Klappachse (44) von einer für den Transportbetrieb vorgesehenen unteren Stellung in eine für den Feldbetrieb vorgesehene obere Stellung aufweist, in der zugleich zur Feldbearbeitung vorgesehene Arbeitswerkzeuge (22) in Bodenkontakt gebracht werden.

7. Fahrzeugflotte, bestehend aus einer Vielzahl einzelner Fahrzeuggespanne (10) nach wenigstens einem der Ansprüche 1 bis 6.

## Claims

1. Agricultural vehicle-trailer combination comprising a traction module (14) which is configured as an appliance carrier (12) with a drive element (16) engaging in the ground and a working appliance (20) which is attached to the traction module (14) by means of a coupling apparatus (18), with a folding axle (44) supporting the working appliance (20) relative to the ground at least during transport mode, wherein the coupling apparatus (18) has a slewing mechanism (72) for providing a degree of freedom of rotation between the traction module (14) and the working appliance (20) along a longitudinal axis (74) of the working appliance (20) and a pivot joint (76) for providing a degree of freedom of pivoting between the traction module (14) and the working appliance (20) along a vertical axis (78) of the traction module (14), wherein the pivot joint (76) is adjustable relative to its pivot angle (δ) by means of a steering actuator (80) for influencing the direction of travel of the vehicle-trailer combination (10).

2. Vehicle-trailer combination according to Claim 1, **characterized in that** the drive element (16) engaging in the ground is an individual wheel drive or caterpillar drive (24).

3. Vehicle-trailer combination according to Claim 1 or 2, **characterized in that** the drive element (16) engaging in the ground is electrically operated.

4. Vehicle-trailer combination according to at least one of Claims 1 to 3, **characterized in that** the steering actuator (80) is formed by at least one steering cylinder (82, 84) which, for adjusting the pivot angle (δ), runs between a supporting structure (86) of the traction module (14) and a base plate (88) of the pivot joint (76) connected to the slewing mechanism (72).

5. Vehicle-trailer combination according to at least one of Claims 1 to 4, **characterized in that** the working appliance (20) has a device (66) for the height adjustment of working tools (22) provided for field treatment.

6. Vehicle-trailer combination according to at least one of Claims 1 to 5, **characterized in that** the working appliance (20) has a device (50) for pivoting the folding axle (44) from a lower position provided for transport mode into an upper position provided for field mode, in which at the same time working tools (22) provided for field treatment are brought into contact with the ground.

7. Vehicle fleet consisting of a plurality of individual vehicle-trailer combinations (10) according to at least one of Claims 1 to 6.

## Revendications

1. Attelage de véhicule agricole, comprenant un module de traction (14) configuré sous forme de porteappareil (12) avec un élément d'entraînement pénétrant dans le sol (16) et un appareil de travail (20) disposé sur le module de traction (14) au moyen d'un dispositif d'accouplement (18) avec un axe de rabattement (44) soutenant l'appareil de travail (20) par rapport au sol au moins pendant un mode de transport, le dispositif d'accouplement (18) présentant une couronne de rotation (72) pour fournir un degré de liberté de rotation entre le module de traction (14) et l'appareil de travail (20) le long d'un axe longitudinal (74) de l'appareil de travail (20) et une articulation de pivotement (76) pour fournir un degré de liberté de pivotement entre le module de traction (14) et l'appareil de travail (20) le long d'un axe vertical (78) du module de traction (14), l'articulation de pivotement (76) étant réglable au regard de son angle de pivotement (δ) au moyen d'un actionneur de direction (80) pour influencer la direction de déplacement de l'attelage de véhicules (10) .

2. Attelage de véhicule selon la revendication 1, **caractérisé en ce que** l'élément d'entraînement pénétrant dans le sol (16) consiste en un entraînement à roue ou à chenille individuel (24).

3. Attelage de véhicule selon la revendication 1 ou 2, **caractérisé en ce que** l'élément d'entraînement pénétrant dans le sol (16) fonctionne électriquement.

4. Attelage de véhicule selon au moins l'une quelconque des revendications 1 à 3, **caractérisé en ce que** l'actionneur de direction (80) est formé par au moins un cylindre de direction (82, 84) qui, pour le réglage de l'angle de pivotement (δ), s'étend entre une structure porteuse (86) du module de traction (14) et une plaque de base (88) de l'articulation de pivotement (76) reliée à la couronne de rotation (72).

5. Attelage de véhicule selon au moins l'une quelconque des revendications 1 à 4, **caractérisé en ce que** l'appareil de travail (20) présente un dispositif (66) pour le réglage en hauteur d'outils de travail (22) prévus pour le travail dans le champ.

6. Attelage de véhicule selon au moins l'une quelconque des revendications 1 à 5, **caractérisé en ce que** l'appareil de travail (20) présente un dispositif (50) pour faire pivoter l'axe de rabattement (44) d'une position inférieure prévue pour le mode de transport dans une position supérieure prévue pour le mode de travail dans le champ, dans laquelle des outils de travail (22) prévus pour le travail dans le champ sont simultanément mis en contact avec le sol.

7. Flotte de véhicules, constituée d'une pluralité d'attelages de véhicule (10) individuels selon au moins l'une quelconque des revendications 1 à 6.
